# EUROPÄISCHE PATENTSCHRIFT

(11) **EP 2 281 705 B1**
(45) Veröffentlichungstag und Bekanntmachung des Hinweises auf die Patenterteilung: **01.01.2014**
(21) Anmeldenummer: 10006247.0
(22) Anmeldetag: 16.06.2010
(51) Int. Cl.: B60J 10/04

(54) **Blende für ein Kraftfahrzeug**
Cover plate for a motor vehicle
Ecran pour un véhicule automobile

(30) Priorität: 29.06.2009 DE 102009031005
(43) Veröffentlichungstag der Anmeldung: 09.02.2011
(73) Patentinhaber: DURA Automotive Body and Glass Systems GmbH, 58840 Plettenberg (DE)
(72) Erfinder: Gerndorf, Ralf, 57413 Finnentrop (DE); Schulze Zur Wiesche, Jochen, 51143 Köln (DE); Bittner, Norfried, 58452 Witten (DE); Nüsken, Axel, 58762 Altena (DE); Schulte, Martin, 58802 Balve (DE)
(74) Vertreter: Zinnecker, Armin

(56) Entgegenhaltungen:
- EP-A1- 1 481 831
- WO-A1-2009/011453
- DE-T2- 60 123 854
- US-A1- 2005 235 573
- US-A1- 2006 156 632
- US-A1- 2006 218 865
- US-A1- 2007 175 102

## Beschreibung

Die Erfindung betrifft eine Blende oder ein sonstiges Zierteil für ein Fahrzeug, insbesondere für ein Kraftfahrzeug.

Die Blende besteht vorzugsweise aus Kunststoff. Sie weist einen U-förmigen Kanal auf, der zur Aufnahme einer Dichtung dient. Die Dichtung ist in den U-förmigen Kanal einbringbar oder eingebracht. Der U-förmige Kanal ist nach außen offen. Er umfaßt eine Basis, einen ersten Schenkel und einen zweiten Schenkel. Die Schenkel liegen einander gegenüber. Die Basis verbindet die beiden Schenkel. Es ist ausreichend, wenn der Kanal im wesentlichen U-förmig ist.

Die Dichtung weist eine erste Dichtlippe auf, die an einem ersten Schenkel des U-förmigen Kanals ununterbrochen anlegbar ist oder anliegt, und eine zweite Dichtlippe, die an dem zweiten Schenkel des U-förmigen Kanals anlegbar ist oder anliegt.

Eine Blende nach dem Oberbegriff des Anspruchs 1 ist aus DE 202 01 528 U1 bekannt. Die DE 197 41 538 A1 zeigt eine ähnliche Blende.

Aus der DE 601 23 854 T2 ist ein Rahmensystem für Fenster eines Kraftfahrzeugs bekannt, das einen Außenrahmen und einen Profil-Innenrahmen umfaßt. Der Außenrahmen nimmt eine Profilführungsschiene mit U-förmigem Querschnitt auf, die an ihrer Außenseite Dichtlippen aufweist.

Die US 2002/0184826 A1 offenbart eine Dichtung für eine bewegliche Scheibe einer Kraftfahrzeugtüre, bei der sich eine U-förmige Dichtung in einem L-förmigen Rahmenteil befindet. Aus der WO 2009/011453 A1 ist eine Blende nach dem Oberbegriff des Anspruchs 1 bekannt.

Aufgabe der Erfindung ist es, die Dichtwirkung der Dichtung bei einer derartigen Blende zu verbessern.

Erfingdungsgemäß wird diese Aufgabe durch die Merkmale des Anspruchs 1 gelöst. Die zweite Dichtlippe liegt an dem zweiten Schenkel des U-förmigen Kanals ununterbrochen an. Hierdurch bildet die zweite Dichtlippe eine ununterbrochene Dichtlinie. Ferner übt die zweite Dichtlippe auf die erste Dichtlippe einen ununterbrochenen Druck aus, wodurch auch die Dichtwirkung der ersten Dichtlippe verbessert wird.

Ein Schenkel des U-förmigen Kanals weist im Abstand von einer der Dichtlippen Halterippen auf. Es ist auch möglich, daß nur eine Halterippe vorhanden ist. Günstiger ist es allerdings, wenn mehrere insbesondere kurze Halterippen vorgesehen sind. Die Halterippen liegen vorzugsweise auf einer Linie, wobei diese Linie auch gebogen oder gekrümmt sein kann. Die Halterippen befinden sich vorzugsweise außerhalb der Dichtlippe, also an einer Stelle des Schenkels des U-förmigen Kanals, die von der Auflagestelle der Dichtlippe in Richtung nach außen beabstandet ist. An den Halterippen kann sich die Dichtung abstützen. Vorteilhaft ist es, wenn an der Dichtung eine entsprechende Haltelippe vorhanden ist, die sich an den Halterippen abstützt.

Erfindungsgemäß sind die Halterippen an den Rändern von Durchbrüchen in dem Schenkel des U-förmigen Kanals vorgesehen. Die Halterippen befinden sich vorzugsweise an den äußeren Rändern der Durchbrüche.

Vorteilhafte Weiterbildungen sind in den Unteransprüchen beschrieben.

Vorteilhaft ist es, wenn die Blende zwischen den Dichtlippen geschlossen ist. Zwischen den Dichtlippen sind insbesondere keine Durchbrüche in der Blende vorhanden. Hierdurch ist gewährleistet, daß Feuchtigkeit, insbesondere Wasser, insbesondere Schlagregen oder Wasser in einer Waschanlage und/oder aus einem Hochdruckreiniger, die von der ersten Dichtlippe nicht zurückgehalten werden, von der zweiten Dichtlippe aufgefangen werden können, ohne daß sie auf diesem Weg durch in der Blende vorhandene Durchbrüche hindurchtreten können. Die Dichtlippen dichten auch akustisch ab; sie schützen vor akustischen äußeren Einflüssen, insbesondere vor Fahrtwind, Außengeräuschen und/oder Windgeräuschen.

Vorzugsweise ist der Abstand der Halterippen von dem gegenüberliegenden Schenkel des U-förmigen Kanals größer oder gleich dem Abstand der inneren Ränder der Durchbrüche von dem gegenüberliegenden Schenkel des U-förmigen Kanals. Um dies zu erreichen kann in dem Schenkel des U-förmigen Kanals, in dem sich die Durchbrüche befinden, eine Stufe vorgesehen sein. Durch das erwähnte Abstandsverhältnis wird ein Hinterschnitt in der Blende vermieden, was insbesondere die Herstellung der Blende aus Kunststoff in einem Kunststoffspritzverfahren erleichtert.

Eine weitere vorteilhafte Weiterbildung ist dadurch gekennzeichnet, daß an der Dichtung eine Haltelippe vorgesehen ist, die an der Innenseite des zweiten Schenkels der Blende anliegt.

Vorteilhaft ist es, wenn die Haltelippe an den Halterippen des zweiten Schenkels der Blende anliegt.

Ein Ausführungsbeispiel der Erfindung wird in der nachstehenden Zeichnung im einzelnen erläutert. In der Zeichnung zeigt
- Fig. 1: einen Teil einer Blende für ein Kraftfahrzeug in einer perspektivischen Darstellung,
- Fig. 2: einen Schnitt längs der Linie A-A in Fig. 1,
- Fig. 3: einen Schnitt längs der Linie B-B in Fig. 1 und
- Fig. 4: eine vergrößerte Einzelheit aus Fig. 3.

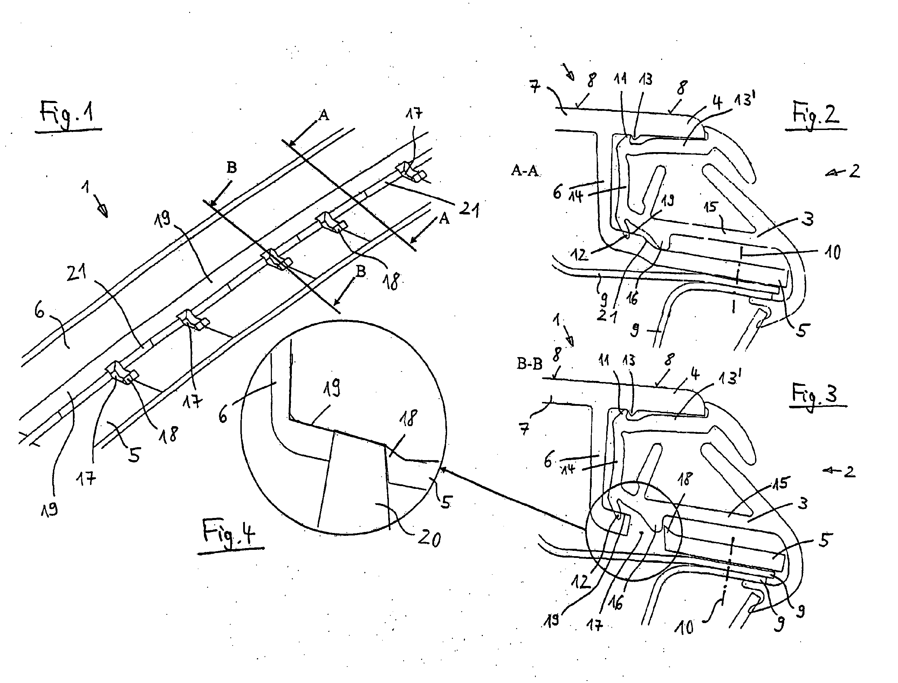

Fig. 1 zeigt ein Blende 1 aus Kunststoff für ein Kraftfahrzeug. Die Blende umfaßt, wie auch aus Fig. 2 und 3 ersichtlich, einen U-förmigen Kanal 2, der eine Dichtung 3 aufnimmt. Der U-förmige Kanal 2 umfaßt einen ersten Schenkel 4 und einen zweiten Schenkel 5, die durch eine Basis 6 miteinander verbunden sind. Der erste Schenkel 4 wird von einer Verlängerung des Deckteils 7 der Blende 1 gebildet. Die Außenfläche 8 des Deckteils 7 und des ersten Schenkels 4 bildet die Sichtfläche der Blende, die von außen sichtbar ist, wenn die Blende 1 an dem Kraftfahrzeug befestigt ist, wie in Fig. 2 und 3 gezeigt.

Der zweite Schenkel 5 ist an den Karosserieblechen 9 oder an entsprechenden Türblechen befestigt, und zwar durch eine Schraube oder eine Niete oder ein ähnliches Befestigungselement, dessen Befestigungsachse mit 10 bezeichnet ist.

Die Dichtung 3 weist eine erste Dichtlippe 11 auf, die an dem ersten Schenkel 4 des U-förmigen Kanals 2 ununterbrochen anliegt. Die Dichtung 3 weist ferner eine zweite Dichtlippe 12 auf, die an dem zweiten Schenkel 5 des U-förmigen Kanals 2 ebenfalls ununterbrochen anliegt.

An der Innenseite des ersten Schenkels 4 ist eine Halterippe 13 vorgesehen, die sich in den U-förmigen Kanal 2 hinein erstreckt und an der die erste Dichtlippe 11 anliegt. Die Halterippe 13 dient zum Halten der ersten Dichtlippe 11.

Die Blende 1 ist zwischen den Dichtlippen 11, 12 geschlossen. In diesem Bereich, der von einem Teil des ersten Schenkels 4, der Basis 6 und einem Teil des zweiten Schenkels 5 gebildet wird, sind in der Blende keine Durchbrüche vorhanden. Feuchtigkeit und/oder Geräusche, die von außen her eindringen, werden durch die erste Dichtlippe 11 zurückgehalten. Wenn ein geringer Teil der Feuchtigkeit bzw. der Geräusche die erste Dichtlippe 11 überwinden gelangen sie entlang der Basis 6 zur zweiten Dichtlippe 12, wo sie dann endgültig zurückgehalten werden. Da die Blende 1 auf dem Weg von der ersten Dichtlippe 11 zur zweiten Dichtlippe 12 geschlossen ist, können Feuchtigkeit und/oder Geräusche auf diesem Weg nicht nach innen zum Kraftfahrzeug hin vordringen.

Die Dichtung 3 ist ebenfalls im wesentlichen U-förmig gestaltet. Der erste Schenkel 13' der Dichtung 3 liegt an der Innenseite des ersten Schenkels 4 der Blende 1 an. Die Basis 14 der Dichtung 3 verläuft im Bereich der Basis 6 der Blende 1. Der zweite Schenkel 15 der Dichtung 3 verläuft im wesentlichen parallel zum zweiten Schenkel 5 der Blende 1. Die erste Dichtlippe 11 liegt an der Verbindungsstelle des ersten Schenkels 13' und der Basis 14 der Dichtung 3. Die zweite Dichtlippe 12 befindet sich an der Verbindungsstelle der Basis 14 und des zweiten Schenkels 15 der Dichtung 3.

Am zweiten Schenkel 15 der Dichtung 3 ist eine Haltelippe 16 vorgesehen. Die Haltelippe 16 weist von dem zweiten Schenkel 15 nach außen, also zum zweiten Schenkel 5 der Blende 1 hin. Sie liegt an der Innenseite des zweiten Schenkels 5 der Blende an.

Wie insbesondere aus Fig. 1 und 3 ersichtlich sind in dem zweiten Schenkel 5 der Blende 1 Durchbrüche 17 vorgesehen. Die Durchbrüche 17 liegen im wesentlichen auf einer Linie. An den Rändern der Durchbrüche 17 sind Halterippen 18 vorgesehen. Die Halterippen 18 befinden sich an den äußeren Rändern der Durchbrüche 17, also an den der Basis 6 abgewandten Rändern der Durchbrüche 17. Die Halterippen 18 ragen von der Ebene des zweiten Schenkels 5 nach oben, also in den U-förmigen Kanal 2 hinein.

Die Durchbrüche 17 befinden sich im Abstand von der Basis 6 der Blende 1. Die Durchbrüche 17 und die Halterippen 18 befinden sich außerhalb der zweiten Dichtlippe 12, also an einer Stelle des zweiten Schenkels 5, die von der Auflagestelle 19 der zweiten Dichtlippe 12 in Richtung nach außen beabstandet ist, wie insbesondere aus Fig. 3 ersichtlich. Hierdurch ist gewährleistet, daß die zweite Dichtlippe 12 ununterbrochen an der Auflagestelle 19 aufliegen kann. Die zweite Dichtlippe 12 kann damit über ihre gesamte Länge eine uneingeschränkte Dichtwirkung entfalten. Darüber hinaus wird durch die Auflage der zweiten Dichtlippe 12 ein Druck auf die Dichtung 3 erzeugt, der entlang deren Basis 14 zur ersten Dichtlippe 11 hin wirkt und diese ununterbrochen an den ersten Schenkel 4 der Blende 1 andrückt.

Die Haltelippe 16 der Dichtung 3 liegt an den Halterippen 18 des zweiten Schenkels 5 der Blende 1 an. Sie stützt sich an diesen Halterippen 18 ab und hält die Dichtung 3 auf diese Weise in dem U-förmigen Kanal 2.

Wie insbesondere aus Fig. 3 ersichtlich ist der Abstand der Halterippen 18 von dem gegenüberliegenden ersten Schenkel 4 des U-förmigen Kanals 2 größer als der Abstand der inneren Ränder der Durchbrüche 17 von dem gegenüberliegenden ersten Schenkel 4 der Blende 1. Der innere Rand des jeweiligen Durchbruchs 17 wird dabei von dem äußeren Ende der Auflagestelle 19 gebildet. Durch die erwähnte Abstandsbeziehung ist gewährleistet, daß der Schieber der Spritzgußform für die Blende aus dem U-förmigen Kanal 2 herausbewegt werden kann, wobei diese Bewegung in der Darstellung der Fig. 2 und 3 in Richtung nach rechts erfolgt. In dieser Richtung wird durch die erwähnte Abstandsbeziehung kein Hinterschnitt gebildet, der die Herausbewegung des Schiebers behindern könnte.

Ferner kann durch diese Abstandsbeziehung erreicht werden, daß auch der die Durchbrüche 17 erzeugende Kern 20 des Spritzgießwerkzeugs die Entformung der Kunststoffblende nicht behindert, wie in Fig. 4 gezeigt. Beim Spritzgießvorgang befindet sich der Kern 20 dort, wo die Durchbrüche 17 gebildet werden.

Zur Erzeugung der erwähnten Abstandsbeziehung ist in dem zweiten Schenkel 5 der Blende 1 eine Stufe 21 vorgesehen, die einen Höhenunterschied zwischen dem äußeren Bereich des zweiten Schenkels 5 und dessen inneren Bereich bildet. Im äußeren Bereich befinden sich die Halterippen 18, im inneren Bereich die Auflagestelle 19. Die Auflagestelle 19 liegt näher an dem gegenüberliegenden, ersten Schenkel 4 als der äußere Bereich des zweiten Schenkels 5.

Durch die Erfindung wird eine Blende aus Kunststoff geschaffen, die einen Kanal zur Aufnahme einer Dichtung aufweist. Die Dichtung wird formschlüssig in der Blende gehalten. Zwei Dichtlippen liegen jeweils ununterbrochen an der Innenseite des Aufnahmekanals an. Sie bilden auf diese Weise zwei durchgehende Dichtlinien. Zwischen den beiden Dichtlippen hat die Blende keine Durchbrüche. An der Dichtung ist ferner eine Haltelippe angeformt, die sich an den Rändern von Durchbrüchen in der Blende abstützt. In dem Schenkel der Blende, in dem die Durchbrüche vorgesehen sind, ist eine Stufe angeformt, so daß die zweite Dichtlippe und die Haltelippe auf verschiedenen Ebenen liegen, wodurch ein Hinterschnitt im Werkzeug vermieden wird. Fig. 2 und 3 zeigen einen Horizontalschnitt durch eine Fallfensterdichtung. Das Fenster wird von der U-förmigen Öffnung der Dichtung 3 eingefaßt. Das Fenster ist allerdings nicht zeichnerisch dargestellt.

## Patentansprüche

1. Blende für ein Fahrzeug mit einem U-förmigen Kanal (2), in dem eine Dichtung (3) aufgenommen ist, die eine erste Dichtlippe (11) aufweist, die an einem ersten Schenkel (4) des U-förmigen Kanals (2) ununterbrochen anliegt, und eine zweite Dichtlippe (12), die an dem zweiten Schenkel (5) des U-förmigen Kanals (2) ununterbrochen anliegt, wobei ein Schenkel (5) des U-förmigen Kanals (2) im Abstand von einer der Dichtlippen (12) Halterippen (18) aufweist,
**dadurch gekennzeichnet,**
**daß** die Halterippen (18) an den Rändern von Durchbrüchen (17) in dem Schenkel (5) des U-förmigen Kanals (2) vorgesehen sind.

2. Blende nach Anspruch 1, **dadurch gekennzeichnet, daß** die Blende aus Kunststoff ist.

3. Blende nach Anspruch 1 oder 2, **dadurch gekennzeichnet, daß** die Blende zwischen den Dichtlippen (11, 12) geschlossen ist.

4. Blende nach einem der vorhergehenden Ansprüche, **dadurch gekennzeichnet, daß** der Abstand der Halterippen (18) von dem gegenüberliegenden Schenkel (4) des U-förmigen Kanals (2) größer oder gleich dem Abstand der inneren Ränder der Durchbrüche (17) von dem gegenüberliegenden Schenkel (4) des U-förmigen Kanals (2) ist.

5. Blende nach einem der vorhergehenden Ansprüche, **dadurch gekennzeichnet, daß** an der Dichtung (3) eine Haltelippe (16) vorgesehen ist, die an der Innenseite des zweiten Schenkels (5) der Blende anliegt.

6. Blende nach Anspruch 5, **dadurch gekennzeichnet, daß** die Haltelippe (16) an den Halterippen (18) des zweiten Schenkels (5) der Blende anliegt.

## Claims

1. A panel for a vehicle having a U-shaped passage (2) in which a seal (3) is received which has a first sealing lip (11) which contacts a first limb (4) of the U-shaped passage (2) in an uninterrupted manner and having a second sealing lip (12) which contacts the second limb (5) of the U-shaped passage (2) in an uninterrupted manner, wherein a limb (5) of the U-shaped passage (2) has holding ribs (18) at a spacing of one of the sealing lips (12),
**characterized in that**
the holding ribs (18) are provided at the rims of openings (17) in the limb (5) of the U-shaped passage (2).

2. A panel in accordance with claim 1, **characterized in that** the panel is made of plastic.

3. A panel in accordance with claim 1 or 2, **characterized in that** the panel is closed between the sealing lips (11, 12).

4. A panel in accordance with one of the preceding claims, **characterized in that** the spacing of the holding ribs (18) from the oppositely disposed limb (4) of the U-shaped passage (2) is larger than or equal to the spacing of the inner rims of the openings (17) from the oppositely disposed limb (4) of the U-shaped passage (2).

5. A panel in accordance with one of the preceding claims, **characterized in that** a holding lip (16) which contacts the inner side of the second limb (5) of the panel is provided at the seal (3).

6. A panel in accordance with claim 5, **characterized in that** the holding lip (16) contacts the holding ribs (18) of the second limb (5) of the panel.

## Revendications

1. Écran pour un véhicule comprenant un canal en forme de U (2), dans lequel un joint d'étanchéité (3) est logé, lequel joint présente une première lèvre d'étanchéité (11), qui est en contact ininterrompu avec un premier côté (4) du canal en forme de U (2), et une seconde lèvre d'étanchéité (12), qui est en contact ininterrompu avec le second côté (5) du canal en forme de U (2), dans lequel un côté (5) du canal en forme de U (2) présente des nervures de retenue (18) à distance de l'une des lèvres d'étanchéité (12),
**caractérisé en ce que**
les nervures de retenue (18) sont prévues sur les bords d'ouvertures (17) dans le côté (5) du canal en forme de U (2).

2. Écran selon la revendication 1, **caractérisé en ce que** l'écran est en matière plastique.

3. Écran selon la revendication 1 ou 2, **caractérisé en ce que** l'écran est fermé entre les lèvres d'étanchéité (11, 12).

4. Écran selon l'une des revendications précédentes, **caractérisé en ce que** l'écart entre les nervures de retenue (18) et le côté (4) opposé du canal en forme de U (2) est supérieur ou égal à l'écart entre les bords intérieurs des ouvertures (17) et le côté (4) opposé du canal en forme de U (2).

5. Écran selon l'une des revendications précédentes, **caractérisé en ce qu'**une lèvre de retenue (16) est prévue sur le joint d'étanchéité (3), laquelle est en contact avec la face intérieure du second côté (5) de l'écran.

6. Écran selon la revendication 5, **caractérisé en ce que** la lèvre de retenue (16) est en contact avec les nervures de retenue (18) du second côté (5) de l'écran.
